# EUROPEAN PATENT SPECIFICATION

(11) **EP 0 551 688 B1**
(45) Date of publication and mention of the grant of the patent: **20.09.1995**
(21) Application number: 92300166.3
(22) Date of filing: 08.01.1992
(51) Int. Cl.: C01B 33/00, C01B 35/12, C01B 33/18, B01J 29/04, B01J 29/06

(54) **A process for the preparation of crystalline molecular sieves**
Verfahren zur Herstellung kristalliner Molekularsiebe
Procédé de préparation de tamis moléculaires cristallins

(43) Date of publication of application: 21.07.1993
(73) Proprietor: Council of Scientific and Industrial Research, New Delhi 110 001 (IN)
(72) Inventor: Kumar, Rajiv, Pune-411008, Maharashtra (IN); Reddy, Korandla Ramesh, Pune-411008, Maharashtra (IN); Ratnasamy, Paul, Pune-411008, Maharashtra (IN)
(74) Representative: Woods, Geoffrey Corlett

(56) References cited:
- EP-A- 0 135 658
- EP-A- 0 384 997
- WO-A-91/11258

## Description

This invention relates to a process for the preparation of crystalline molecular sieves. More particularly, this invention relates to the preparation of crystalline microporous metallosilicate molecular sieves having catalytic properties in reactions such as isomerization, aromatization, disproportionation of toluene, xylenes, ethylbenzene, etc., alkylation and transalkylation of toluene, conversion of alcohols to olefins and aromatics etc.

The crystalline, porous, metallosilicate molecular sieves prepared by the process of the present invention are constituted of oxides of silicon and aluminium or other trivalent metals such as boron, iron, gallium, chromium etc. having well ordered porous structure consisting of interconnected channels of precisely defined and uniform dimensions. These materials are also known as zeolites. These molecular sieves may also be constituted of Si0₂ tetrahedra only where other metal ions are absent. The molecular sieve prepared by the process of the invention has the chemical composition, in terms of oxide mole ratios: by the formula SiO₂ : equal to or less than 0.1 M₂O₃ : equal to or less than 0.2 X₂/ₙO where x is mixture of cation of valency n, and M is one or more of aluminium, iron, gallium, boron and chromium.

A quite significant feature of the zeolites is the catalytic activity exhibited by them in acid catalyzed reactions. These zeolites possess a rigid framework of crosslinked SiO₄ and A1O₄ tetrahedra. The negative charge of the tetrahedra containing the trivalent aluminium ions is balanced by the inclusion of non-framework charge-balancing cations usually of an alkali metal. This non-framework alkali metal ion can be replaced by conventional techniques of ion exchange by other cations like NH₄⁺, K⁺, Ca²⁺ or La³⁺ etc.. The deammoniation by calcination in air flow of these zeolites containing NH₄⁺ cation yields the acid form (H⁺ form) of the zeolite, which is catalytically active in reactions such as isomerization, alkylation, disproportionation, cracking etc.

The present invention provides a process for the preparation of novel synthetic crystalline molecular sieves. The novel molecular sieve prepared by the process of the present invention consists of the oxides of Si and M, where M = Al or B or Fe or Ga or Cr or mixtures thereof. In a general embodiment of the present invention the starting gel has the following oxide molar ratios:
SiO₂/M₂O₃ = 20 or more
SiO₂/X₂O = 2-20
SiO₂/R₂O = 5-60
H₂O/SiO₂ = 10-100
OH⁻/SiO₂ = 0.05-0.5
where M is as described hereinabove, R is an organic molecule like hexamethylene bis(trialkyl ammonium bromide), where the alkyl group may be ethyl or propyl or mixtures thereof and X is a monovalent cation such as Na⁺, K⁺, NH₄⁺ etc. In a preferred embodiment of the present invention the starting gel has the following oxide molar ratios:
SiO₂/M₂O₃ = 30 or more
SiO₂/X₂O = 3-10
SiO₂/R₂O = 10-40
H₂O/SiO₂ = 20-70
OH⁻/SiO₂ = 0.1-0.3
where M, X and R are as described herein above.

Accordingly, the present invention provides a process for the preparation of novel crystalline molecular sieves, characterised by the X-ray diffraction pattern given in table I below and a chemical composition in terms of mole ratios of oxides in the anhydrous state by the formula aX₂O : bM₂O₃ : cSiO₂ where X is a mixture of monovalent cation selected from alkali metal, ammonium and hydrogen, M is selected from Al, B, Fe, Ga, Cr or mixtures thereof and a=0.0 to 1.0, b=0.0 to 1.0 and c=20 or above which comprises (i) mixing a source of silicon and sources of Al, Ga, Fe, Cr, B or mixtures thereof and alkali metal with a hexamethylene bis(trialkyl ammonium) salt, (ii) autoclaving the resultant gel by treating at a temperature in the range of 100-200°C under static or rotatic condition, (iii) quenching the resultant crystalline material in cold water, filtering and washing with deionised water thoroughly, (iv) drying at a temperature in the range of 80-150°C for a period ranging from 1-16 hrs, (v) calcining in the temperature range of 400-550°C for a period of 12-24 hours to obtain a composite material having predominantly alkali metal as the monovalent cation, (vi) optionally treating the resultant composite material with an aqueous solution containing ammonium ion by ion exchange process to produce a catalyst composite having predominantly ammonium as the monovalent cation and optionally (vii) calcining the resultant composite material by heating at a temperature in the range of 400-550°C for a period in the range of 8-24 hours to obtain the catalyst composite material having predominantly hydrogen as the monovalent cation.

The hexamethylene bis(trialkyl ammonium) salt used is preferably a chloride, bromide, iodide, hydroxide or mixture thereof wherein the alkyl groups are preferably ethyl, propyl, or a mixture thereof.

In the above said procedures to convert alkali metal form to H⁴ form via NH₄⁺ form, it may be likely that the catalyst composite material may have the mixture of alkali metal, NH₄⁺ and H⁺ forms. Though the molecular sieve material obtained as herein before may be directly used as a catalyst, it is desirable, in various large scale applications, to enhance the mechanical strength and ease of handling by admixing it with a suitable binder material and converting it into a suitable shape such as cylindrical extrudates, spheres, etc.. Silica, alumina, clay mineral, such as bentonite, kaolinite and mixtures thereof are examples of suitable binder material which impart improved mechanical properties to the metallosilicate catalyst composite material.

According to a further feature of the present invention, the metal ions in the catalyst composite material prepared are in trivalent positive oxidation state and are present in crystalline framework lattice positions and are not present as non-framework cations in positions where they could be replaced by ion exchange.

The structure of the molecular sieve material prepared by the process of the present invention can be characterized by x-ray diffraction techniques. The X-ray powder pattern, taken on a Philips PW 130 diffractometer using CuK radiation is shown in Table 1.

**Table 1**

| X-ray diffraction of Catalyst Composite Material | | |
|---|---|---|
| 2ϑ | d (Å) | Relative Intensity |
| 6.054 ± 0.20 | 14.487 ± 0.45 | vs-s |
| 7.388 ± 0.20 | 11.988 ± 0.40 | s |
| 8.178 ± 0.20 | 10.803 ± 0.40 | s |
| 10.938 ± 0.20 | 8.082 ± 0.40 | w |
| 14.544 ± 0.20 | 6.082 ± 0.40 | w |
| 17.664 ± 0.15 | 5.017 ± 0.30 | w |
| 18.504 ± 0.15 | 4.791 ± 0.30 | w |
| 21.054 ± 0.10 | 4.216 ± 0.25 | s |
| 22.374 ± 0.10 | 3.970 ± 0.20 | vs |
| 24.804 ± 0.10 | 3.587 ± 0.20 | w |
| 30.936 ± 0.05 | 2.888 ± 0.20 | w |
| 37.326 ± 0.05 | 2.407 ± 0.15 | w |

a: Based on a relative intensity scale in which the strongest line in the X-ray pattern is assigned a value of 100:
   vs (very strong) > 60
   s (strong) > 40 but < 60
   m (medium) > 20 but < 40
   w (weak) < 20,
After calcination at 550°C for 16 hours in the flow of air and ion exchange of the charge balancing cations (for example Na⁺) by other cations like NH₄⁺, H⁺, K⁺, Ca²⁺ etc., the molecular sieve material shows the same x-ray diffraction pattern as given in Table 1 with some minor shift in angle 2ϑ or d-spacings.

The presence of Al, B or Ga in tetrahedral lattice positions of the molecular sieve composite material can be evidenced by solid stage magic angle spinning nuclear magnetic resonance spectroscopy (MAS NMR). The evidence for the presence of Fe in molecular sieve framework can be obtained by electron spin resonance spectroscopy (ESR) (g=4.3), Mossbauer spectroscopy (chemical shift = 0.2-0.3 mm/s at room temperature) and magnetic susceptibility data (5.6-5.9 B.M.).

The practice of the present invention will be further described in the reference of the following examples which are for illustrative purposes only.

### Example 1

In this example the detailed method of the preparation of the molecular sieve material will be described. In a typical preparation 0.67 g. Al(NO₃)₃.9H₂O and 5 g. Sulphuric acid were added to 50 g. distilled water to yield solution A. The solution A is mixed to the reaction vessel containing 30 g. tetraethyl orthosilicate (TEOS) with continuous stirring for half an hour. Then 8.57 g. hexamethylene bis(triethyl ammonium bromide) in 30 g. H₂O was added slowly to the aluminosilicate mixture. Finally 1.9 g. NaOH in 20 g. H₂O was added under vigorous stirring. The white gel so obtained is filled in a stainless steel autoclave and it is capped tightly and put in an oven. The crystallization is carried out at 160°C for 10 days. Then the autoclave is removed from the oven, the crystallization is terminated by quenching the autoclave with cold water. The autoclave is opened after it is cooled, the contents are filtered, washed thoroughly with deionised water, dried at 120°C. The x-ray diffraction data correspond to those given in Table 1. Calcination of as-synthesized crystalline aluminosilicate is done at 450-550°C for 18 hours. The chemical composition of the material on anhydrous basis was found to be: 0.6 Na₂O: Al₂O₃: 146 SiO₂.

### Example 2

In this example the detailed method of the preparation of a molecular sieve material with higher amount of aluminium will be described. In a typical preparation 2.70 g. Al(NO₃)₃.9H₂O and 5 g. Sulphuric acid were added to 50 g. distilled water to yield solution A. The solution A is mixed to the reaction vessel containing 30 g. TEOS with continuous stirring for half an hour. Then 8.57 g. hexamethylene bis(triethyl ammonium bromide) in 30 g. H₂O was added slowly to aluminosilicate mixture. Finally 1.9 g. NaOH in 20 g. H₂O was added under vigorous stirring. The white gel so obtained is filled in a stainless steel autoclave and it is capped tightly and put in an oven. The crystallization is carried out at 160°C for 10 days. Then the autoclave is removed from the oven, the crystallization is terminated by quenching the autoclave with cold water. The autoclave is opened after it is cooled, the contents are filtered, washed thoroughly with deionised water, dried at 120°C. The x-ray diffraction data correspond to those given in Table 1. Calcination of as-synthesized crystalline aluminosilicate is done at 450-550°C for 16 hours. The chemical composition of the material on anhydrous basis was found to be: 0.6 Na₂O: Al₂O₃: 36 SiO₂.

### Example 3

In this example the detailed method of the preparation of the pure silica polymorph of the molecular sieve material will be described. In a typical preparation 8.57 g of hexamethylene bis (triethyl ammonium bromide) and 20g water were added to the mixture of 30 g. tetraethyl orthosilicate (TEOS) and 1.9 g. NaOH, dissolved in 20 g of water, under vigorous stirring. The white gel so obtained was filled in a stainless steel autoclave and it was capped tightly and put in an oven. The crystallization is carried out at 160°C for 10 days. Then the autoclave is removed from the oven, the crystallization is terminated by quenching the autoclave with cold water. The autoclave is opened after it is cooled, the contents are filtered, washed thoroughly with deionised water, dried at 120°C and calcined in air at 550°C. The x-ray diffraction data corresponded to those given in Table 1. The sample was free of Al.

### Example 4

In this example the detailed method of the preparation of ferrisilicate catalyst composite material will be described. In a typical preparation 0.72 g Fe (NO₃)₃.9H₂O and 5.0 g. sulphuric acid were added to 50 g. distilled water to yield solution A. The solution A is mixed to the reaction vessel containing 30 g. TEOS with continuous stirring for half an hour. Then 8.57 g. hexamethylene bis(triethyl ammonium bromide) in 30 g. H₂O was added slowly to ferrisilicate mixture. Finally 1.9 g. NaOH in 20 g. H₂O was added under vigorous stirring. The white gel so obtained is filled in a stainless steel autoclave and it is capped tightly and put in an oven. The crystallization is carried out at 160°C for 10 days. Then the autoclave is removed from the oven, the crystallization is terminated by quenching the autoclave with cold water. The autoclave is opened after it is cooled, the contents are filtered, washed thoroughly with deionised water, dried at 120°C. The x-ray diffraction data correspond to those given in Table 1. Calcination of as-synthesized crystalline ferrisilicate is done at 480°C for 16 hours. The chemical composition of the material on anhydrous basis was found to be:

0.7 Na₂O: Fe₂O₃: 160 SiO₂.

### Example 5

In this example the detailed method of the preparation of gallosilicate analog of zeolite catalyst composite material will be described. In a typical preparation 0.51g. Ga₂(SO₄)₃.9H₂O in 15ml alcohol is mixed to the reaction vessel containing 30 g. TEOS with continuous stirring for half an hour. Then 3.3 g. sulphuric acid followed by 3.8 g.hexamethylene bis-(triethyl ammonium bromide) in 10 g. H₂O were added slowly to gallosilicate mixture. Finally 1.9 g. NaOH in 18 g. H₂O was added under vigorous stirring. The white gel so obtained is filled in a stainless steel autoclave and it is capped tightly and put in an oven. The crystallization is carried out at 160°C for 10 days. Then the autoclave is removed from the oven, the crystallization is terminated by quenching the autoclave with cold water. The autoclave is opened after it is cooled, the contents are filtered, washed thoroughly with deionised water, dried at 120°C. The x-ray diffraction data correspond to those given in Table 1. Calcination of as-synthesized crystalline gallosilicate is done at 480°C for 16 hours. The chemical composition of the material was found to be:

0.7 Na₂O: Ga₂O₃: 140 SiO₂.

### Example 6

In this example the detailed method of the preparation of borosilicate catalyst composite material will be described. In a typical preparation 0.37 g. H₃BO₃ and 5 g. Sulphuric acid were added to 30 g. distilled water to yield solution A. The solution A is mixed to the reaction vessel containing 30 g. TEOS with continuous stirring for half an hour. Then 8.77 g. hexamethylene bis-(triethyl ammonium bromide) in 30 g. H₂O was added slowly to borosilicate mixture. Finally 1.9 g. Na OH in 40 g. H₂O was added under vigorous stirring. The white gel so obtained is filled in a stainless steel autoclave and it is capped tightly and put in an oven. The crystallization is carried out at 160°C for 10 days. The autoclave is removed from the oven, the crystallization is terminated by quenching the autoclave with cold water. The autoclave is opened after it is cooled, the contents are filtered, washed thoroughly with deionised water, dried at 120°C. The x-ray diffraction data correspond to those given in Table 1. Calcination of as-synthesized crystalline borosilicate is done at 480°C for 16 hours. The chemical composition of the material was found to be:

0.6 Na₂O: B₂O₃: 150 SiO₂

### Example 7

This example illustrates the process for replacing the alkali metal ions present in crystalline metallosilicate composite material by ammonium ions. Sample of the product of Examples 1-6 are subjected to ammonium exchange. The dry powdered material is refluxed with an aqueous solution of ammonium nitrate at 80-90°C for 4 hours. This process was repeated two times. The product so obtained is washed thoroughly with deionised water, dried at 120°C for 8 hours in an air oven to get ammonium form of the zeolite.

### Example 8

This example illustrates the process of replacing NH₄⁺ ions present in zeolite composite material by hydrogen ions. The samples of example 4 are calcined at 480°C for 18 hours in a flow of air to produce catalytically active protonic form of the metallosilicate catalyst composite material, which may contain H⁺ or mixture of H⁺, NH₄⁺ and alkali metal cations.

### Example 9

In this example, the adsorption properties of the Na form of calcined molecular sieve obtained as the product of example 1 are given. The adsorption measurements were carried out using Cahn balance at 25°C and at P/ₒ=0.5. The adsorption capacities of the product of example 1 are summarized in Table 2.

**Table 2**

| Adsorption capacities of Na-form of the catalyst composite material. | | |
|---|---|---|
| Sorbate | Uptake (% w/w) | apparent voidage filled (cm³ g⁻¹) |
| water | 4.8 | 0.048 |
| n-hexane | 7.0 | 0.1.6 |
| cyclohexane | 6.1 | 0.078 |
| orthoxylene | 7.3 | 0.050 |
| 1,3,5 trimethylbenzene | 4.5 | 0.085 |
| 1,3,5 triisopropylbenzene | 0.0 | 0.000 |

## Claims

1. A crystalline molecular sieve, having as-synthesized the x-ray diffraction pattern given in the following Table:
| 2ϑ | d (Å) | Relative Intensity |
|---|---|---|
| 6.054 ± 0.20 | 14.487 ± 0.45 | vs-s |
| 7.388 ± 0.20 | 11.988 ± 0.40 | s |
| 8.178 ± 0.20 | 10.803 ± 0.40 | s |
| 10.938 ± 0.20 | 8.082 ± 0.40 | w |
| 14.544 ± 0.20 | 6.082 ± 0.40 | w |
| 17.664 ± 0.15 | 5.017 ± 0.30 | w |
| 18.504 ± 0.15 | 4.791 ± 0.30 | w |
| 21.054 ± 0.10 | 4.216 ± 0.25 | s |
| 22.374 ± 0.10 | 3.970 ± 0.20 | vs |
| 24.804 ± 0.10 | 3.587 ± 0.20 | w |
| 30.936 ± 0.05 | 2.888 ± 0.20 | w |
| 37.326 ± 0.05 | 2.407 ± 0.15 | w |
and the chemical composition, in term of mole ratios of oxides in the anhydrous state, given by the formula aX₂ : bM₂O₃ : cSiO₂ where X is a monovalent cation selected from alkali metals, ammonium and hydrogen or a mixture thereof, M is Al, B, Fe, Ga or Cr or a mixture thereof, a = 0.0 to 1.0, b = 0.0 to 1.0, and c = 20 or above.

2. A molecular sieve according to claim 1 wherein a is 0 to 1, b is 1, c is 30 to 180.

3. Process for the preparation of a molecular sieve according to claim 1 or 2 which comprises (i) mixing a source of silicon, a source of Al, Fe, Ga, Boron, chromium or a mixture thereof, and a source of an alkali metal, with an organic compound containing nitrogen, (ii) autoclaving the resultant gel by heating at a temperature in the range of 100-200°C under static or rotatic conditions, (iii) quenching the resultant crystalline material in cold water, filtering and washing with deionised water, (iv) drying at a temperature in the range of 80-150°C, for a period ranging between 1-16 hours, and (v) calcining in the temperature range of 400-550°C for a period of 12-24 hours to obtain a composite material having predominantly alkali metal as the monovalent cation, and optionally (vi) heating the resultant composite material with an aqueous solution containing ammonium ion by ion exchange process to produce a catalyst composite having predominantly ammonium as the monovalent cation, and optionally (vii) calcining the resultant catalyst composite by heating at a temperature in the range of 400-550°C, for a period in the range of 8-24 hours, to obtain the catalyst composite material having predominantly hydrogen as the monovalent cation.

4. A process as claimed in claim 3 wherein the monovalent cation represented by X is sodium, potassium ammonium, hydrogen or a mixture thereof.

5. A process as claimed in claim 3 or 4 wherein the source of silicon is silicon oxide, silicon chloride or a tetraalkyl orthosilicate.

6. A process as claimed in claim 3, 4, or 5, wherein the source of Al, Fe, Ga, Cr or B is a nitrate, chloride, alkoxide, or oxide thereof or their mixtures.

7. A process as claimed in any one of claims 3 to 6 wherein the source of the monovalent cation is a nitrate, chloride, hydroxide, oxide or mixture thereof.

8. A process as claimed in any one of claims 3 to 7 wherein the organic compound containing nitrogen is a hexamethylene bis(trialkyl ammonium) salt such as the chloride, bromide, iodide, hydroxide or mixtures thereof, where the alkyl groups are preferably ethyl, propyl or a mixture thereof.

9. A process as claimed in any one of claims 3 to 8 wherein the aqueous solution containing ammonium ion for the ion-exchange is a solution of ammonium chloride, ammonium sulfate, ammonium nitrate, ammonium acetate, or ammonium hydroxide.

10. A process as claimed in any one of claims 3 to 9 wherein the resultant composite material is mixed with binder such as silica, alumina, a clay material such as bentonite, or kaolinite, or a mixture thereof.

## Patentansprüche

1. Kristallines Molekularsieb, das, wie synthetisiert, das in der folgenden Tabelle angegebene Röntgendiffraktionsmuster besitzt:
| 2 ϑ | d (Å) | relative Intensität |
|---|---|---|
| 6,054 ± 0,20 | 14,487 ± 0,45 | sst-st |
| 7,388 ± 0,20 | 11,988 ± 0,40 | st |
| 8,178 ± 0,20 | 10,803 ± 0,40 | st |
| 10,938 ± 0,20 | 8,082 ± 0,40 | schw |
| 14,544 ± 0,20 | 6,082 ± 0,40 | schw |
| 17,664 ± 0,15 | 5,017 ± 0,30 | schw |
| 18,504 ± 0,15 | 4,791 ± 0,30 | schw |
| 21,054 ± 0,10 | 4,216 ± 0,25 | st |
| 22,374 ± 0,10 | 3,970 ± 0,20 | sst |
| 24,804 ± 0,10 | 3,587 ± 0,20 | schw |
| 30,936 ± 0,05 | 2,888 ± 0,20 | schw |
| 37,326 ± 0,05 | 2,407 ± 0,15 | schw |
und die chemische Zusammensetzung, in der Bezeichnung von Molverhältnissen von Oxiden im wasserfreien Zustand, gegeben durch die Formel aX₂:bM₂O₃:cSiO₂, in der X ein aus der Gruppe Alkalimetalle, Ammonium und Wasserstoff oder einer Mischung davon ausgewähltes monovalentes Kation ist, M Al, B, Fe, Ga oder Cr oder eine Mischung davon ist, a = 0,0 bis 1,0, b = 0,0 bis 1,0 und c = 20 oder darüber.

2. Molekularsieb nach Anspruch 1, bei dem a 0 bis 1, b 1 und c 30 bis 180 ist.

3. Verfahren zur Herstellung eines Molekularsiebs nach Anspruch 1 oder 2, wobei das Verfahren folgende Schritte umfaßt:
(i) Mischen einer Siliziumquelle, einer Quelle von Al, Fe, Ga, Bor, Chrom oder einer Mischung davon und einer Alkalimetallquelle mit einem Hexamethylen-bis(trialkylammonium)-Salz,
(ii) Autoklavieren des resultierenden Gels durch Erwärmen bei einer Temperatur in dem Bereich von 100 bis 200°C unter statischen oder umlaufenden Bedingungen.
(iii) Quenchen des resultierenden kristallinen Materials in kaltem Wasser, Filtrieren und Waschen mit deionisiertem Wasser,
(iv) Trocknen bei einer Temperatur in dem Bereich von 80 bis 150°C für eine Dauer in dem Bereich von 1 bis 16 Stunden, und
(v) Calcinieren in dem Temperaturbereich von 400 bis 550°C für eine Dauer von 12 bis 24 Stunden, um eine Materialzusammensetzung mit vorherrschend Alkalimetall als das monovalente Kation zu erhalten und optional
(vi) Erwärmen der resultierenden Materialzusammensetzung mit einer wässrigen Ammoniumionen enthaltenden Lösung in einem Ionenaustauschverfahren, um eine katalytische Zusammensetzung mit vorherrschend Ammonium als monovalentem Kation herzustellen und optional
(vii) Calcinieren der resultierenden katalytischen Zusammensetzung durch Erwärmen bei einer Temperatur in dem Bereich von 400 bis 550°C für eine Dauer in dem Bereich von 8 bis 24 Stunden, um eine katalytische Zusammensetzung mit vorherrschend Wasserstoff als monovalentem Kation zu erhalten.

4. Verfahren wie in Anspruch 3 beansprucht, bei dem das monovalente durch X dargestellte Kation Natrium, Kalium, Ammonium, Wasserstoff oder eine Mischung davon ist.

5. Verfahren wie in Anspruch 3 oder 4 beansprucht, bei dem die Siliziumquelle Siliziumoxid, Siliziumchlorid oder ein Tetraalkylorthosilikat ist.

6. Verfahren wie in Anspruch 3, 4 oder 5 beansprucht, bei dem die Quelle von Al, Fe, Ga, Cr oder b ein Nitrat, Chlorid, Alkoxid oder Oxid davon oder von deren Mischungen ist.

7. Verfahren wie in einem der Ansprüche 3 bis 6 beansprucht, bei dem die Quelle des monovalenten Kations ein Nitrat, Chlorid, Hydroxid, Oxid oder eine Mischung davon ist.

8. Verfahren wie in einem der Ansprüche 3 bis 7 beansprucht, bei dem das Hexamethylen-bis(trialkylammonium)-Salz ein Chlorid, Bromid, Iodid, Hydroxid oder eine Mischung davon ist, wobei die Alkylgruppen Ethyl-, Propyl- oder eine Mischung davon sind.

9. Verfahren wie in einem der Ansprüche 3 bis 8 beansprucht, bei dem die Ammoniumionen für den Ionenaustausch enthaltende wässrige Lösung eine Lösung aus Ammoniumchlorid, Ammoniumsulfat, Ammoniumnitrat, Ammoniumacetat oder Ammoniumhydroxid ist.

10. Verfahren wie in einem der Ansprüche 3 bis 9 beansprucht, bei dem die resultierende Materialzusammensetzung mit Bindemitteln wie Silicamasse, Tonerde, einem Lehmmaterial wie Bentonit oder Kaolinit oder einer Mischung davon vermischt wird.

## Revendications

1. Tamis moléculaire cristallin, ayant, tel que synthétisé, le schéma de diffraction des rayons X donné dans le tableau suivant :
| 2ϑ | d(Å) | Intensité relative |
|---|---|---|
| 6,054 ± 0,20 | 14,487 ± 0,45 | Très forte-forte |
| 7,388 ± 0,20 | 11,988 ± 0,40 | Forte |
| 8,178 ± 0,20 | 10,803 ± 0,40 | Forte |
| 10,938 ± 0,20 | 8,082 ± 0,40 | Faible |
| 14,544 ± 0,20 | 6,082 ± 0,40 | Faible |
| 17,664 ± 0,15 | 5,017 ± 0,30 | Faible |
| 18,504 ± 0,15 | 4,791 ± 0,30 | Faible |
| 21,054 ± 0,10 | 4,216 ± 0,25 | Forte |
| 22,374 ± 0,10 | 3,970 ± 0,20 | Très forte |
| 24,804 ± 0,10 | 3,587 ± 0,20 | Faible |
| 30,936 ± 0,05 | 2,888 ± 0,20 | Faible |
| 37,326 ± 0,05 | 2,407 ± 0,15 | Faible |
et la composition chimique, en termes de rapports molaires des oxydes à l'état anhydre, donnée par la formule aX₂ : bM₂O₃ : cSiO₂, dans laquelle X est un cation monovalent sélectionné parmi les métaux alcalins, l'ammonium et l'hydrogène ou leur mélange, M est Al, B, Fe, Ga ou Cr ou leur mélange, a = 0,0 à 1,0, b = 0,0 à 1,0 et c = 20 ou plus.

2. Tamis moléculaire selon la revendication 1, dans lequel a est compris entre 0 et 1, b est 1 et c est compris entre 30 et 180.

3. Procédé de préparation d'un tamis moléculaire selon la revendication 1 ou 2, lequel comprend (i) le mélange d'une source de silicium, d'une source de Al, Fe, Ga, bore, chrome ou leur mélange et d'une source d'un métal alcalin, avec un sel d'hexaméthylène-bis(trialkylammonium), (ii) le passage à l'autoclave du gel obtenu, par chauffage à une température comprise dans la plage de 100 à 200°C dans des conditions statiques ou de rotation, (iii) la trempe du matériau cristallin obtenu dans de l'eau froide, la filtration et le lavage à l'aide d'eau désionisée, (iv) le séchage à une température comprise dans la plage de 80 à 150°C pendant une durée comprise entre 1 et 16 h et (v) la calcination dans la plage de températures de 400 à 550°C pendant une durée de 12 à 24 h pour obtenir un matériau composite ayant essentiellement un métal alcalin comme cation monovalent et facultativement (vi) le chauffage du matériau composite obtenu par une solution aqueuse contenant l'ion ammonium au moyen d'un procédé d'échange d'ions pour produire un composite catalyseur ayant essentiellement de l'ammonium comme cation monovalent et facultativement (vii) la calcination du composite catalyseur obtenu par chauffage à une température comprise dans la plage de 400 à 550°C pendant une durée comprise dans la plage de 8 à 24 h, pour obtenir le matériau composite catalyseur ayant essentiellement de l'hydrogène comme cation monovalent.

4. Procédé selon la revendication 3, dans lequel le cation monovalent représenté par X est le sodium, le potassium, l'ammonium, l'hydrogène ou leur mélange.

5. Procédé selon la revendication 3 ou 4, dans lequel la source de silicium est de l'oxyde de silicium, du chlorure de silicium ou un orthosilicate de tétraalkyle.

6. Procédé selon la revendication 3, 4 ou 5, dans lequel la source de Al, Fe, Ga, Cr ou B est un nitrate, un chlorure, un alcoolate ou un oxyde de ces derniers ou leurs mélanges.

7. Procédé selon l'une quelconque des revendications 3 à 6, dans lequel la source de cation monovalent est un nitrate, un chlorure, un hydroxyde, un oxyde ou leur mélange.

8. Procédé selon l'une quelconque des revendications 3 à 7, dans lequel le sel d'hexaméthylène-bis(trialkylammonium) est un chlorure, un bromure, un iodure, un hydroxyde ou leur mélange dans lequel les groupements alkyle sont des groupements éthyle, propyle ou leur mélange.

9. Procédé selon l'une quelconque des revendications 3 à 8, dans lequel la solution aqueuse contenant l'ion ammonium pour l'échange d'ions est une solution de chlorure d'ammonium, de sulfate d'ammonium, de nitrate d'ammonium, d'acétate d'ammonium ou d'hydroxyde d'ammonium.

10. Procédé selon l'une quelconque des revendications 3 à 9, dans lequel le matériau composite obtenu est mélangé avec un liant tel que silice, alumine, une argile telle que bentonite, ou kaolinite, ou leur mélange.
